(19) **Europäisches Patentamt / European Patent Office / Office européen des brevets**

(11) **EP 1 790 613 A1**

(12) **EUROPEAN PATENT APPLICATION**
published in accordance with Art. 158(3) EPC

(43) Date of publication:
**30.05.2007 Bulletin 2007/22**

(51) Int Cl.:
**C01B 31/02** (2006.01)    **D01F 9/127** (2006.01)
**D01F 9/133** (2006.01)

(21) Application number: **05765739.7**

(22) Date of filing: **13.07.2005**

(86) International application number:
**PCT/JP2005/012909**

(87) International publication number:
**WO 2006/013706 (09.02.2006 Gazette 2006/06)**

(84) Designated Contracting States:
**DE FR GB**

(30) Priority: **16.07.2004 JP 2004209908**

(71) Applicants:
• **Japan Science and Technology Agency**
  **Kawaguchi-shi,**
  **Saitama 332-0012 (JP)**
• **Taiyo Nippon Sanso Corporation**
  **Shinagawa-ku,**
  **Tokyo 1428558 (JP)**
• **Otsuka Chemical Holdings Co., Ltd.**
  **Osaka-shi, Osaka 540-0021 (JP)**
• **Nissin Electric Co., Ltd.**
  **Kyoto-shi,**
  **Kyoto 615-8686 (JP)**
• **Public University Corporation, Osaka Prefecture**
  **University**
  **Osaka 599-8531 (JP)**

(72) Inventors:
• **NAKAYAMA, Yoshikazu**
  **Hirakata-city, Osaka 573-0084 (JP)**

• **NAGASAKA, Takeshi,**
  **TAIYO NIPPON SANSO CORPORATION**
  **Tokyo 142-8558 (JP)**
• **SAKAI, Toru,**
  **TAIYO NIPPON SANSO CORPORATION**
  **Tokyo 142-8558 (JP)**
• **GOTO, Toshiki,**
  **OTSUKA CHEMICAL CO., LTD.**
  **Osaka-city, Osaka 540-0021 (JP)**
• **TSUCHIYA, Hiroyuki,**
  **NISSIN ELECTRIC CO., LTD.**
  **Kyoto-city, Kyoto 615-8686 (JP)**
• **SHIONO, Keisuke,**
  **DAIKEN CHEMICAL CO., LTD.**
  **Osaka-city, Osaka 536-0011 (JP)**
• **OKAZAKI, Nobuharu**
  **Kurashiki-city, Okayama 701-0115 (JP)**

(74) Representative: **Bittner, Thomas L.**
  **Forrester & Boehmert**
  **Pettenkoferstrasse 20-22**
  **80336 München (DE)**

(54) **PROCESS FOR CARBON NANOSTRUCTURE PRODUCTION CONDUCTING CONTROL OF CATALYST PARTICLE DIAMETER, PRODUCTION APPARATUS THEREFOR, AND CARBON NANOSTRUCTURE**

(57)    The subject invention provides a stable mass production method of carbon nano structure at low cost immune to variation of particle diameter of the catalyst microparticle in the catalyst material. The subject invention also provides a production device used for the method, and a new carbon nano structure having a conformation suitable for the mass production.

The production method of carbon nano structure comprising fluidizing a material gas and catalyst microparticles in the reactor so that the material gas and the catalyst microparticles are brought into contact with each other, wherein said catalyst microparticles are suspended by the instantaneous spraying of the high-pressure gas, and then the suspension effect of the catalyst microparticles is stopped so that the catalyst microparticles naturally fall. The particle diameter of the catalyst microparticles is thus selected. With this arrangement, only the selected catalyst microparticles with the desired diameter are supplied to the reactor. Since this arrangement is immune to influence of variation in particle diameter of catalyst microparticles contained in the catalyst material, it achieves stable mass production of carbon nano structure at low cost.

FIG. 1

## Description

[Technical field]

The present invention relates to a production method of a carbon nano structure such as a carbon nanotube, carbon nanocoil etc., a production device, and a carbon nano structure.

[Background art]

A carbon nano structure designates a nano size substance constituted of carbon atoms. Examples of carbon nano structure includes carbon nanotube; carbon nanotube with beads, which is a carbon nanotube in which beads are formed; a brush carbon nanotube constituted of a forest of carbon nanotubes; carbon nanotwist, which is a twisted carbon nanotube; a coil-shaped carbon nanocoil; and spherical shell fullerene.

Carbon nanocoil was synthesized for the first time in 1994 by way of (Chemical Vapor Deposition, hereinafter referred to as a CVD method) by Amelinckx, and some other researchers (Amelinckx, X.B.Zhang, D. Bernaerts, X. F. Zhang, V. Ivanov and J. B. Nagy, SCIENCE, 265 (1994) 635 (non-patent document1)). It was also found that, in contrast to the conventional carbon microcoil of amorphous structure which is a solid structure in which carbon is filled to the line center, a carbon nanocoil has a graphite crystal structure and a tube structure.

In the method of Amelinckx and others, a single metal catalyst such as Co, Fe, or Ni was processed into fine powder, and the vicinity of the catalyst was heated to 600 to 700°C, and an organic gas such as acetylene or benzene was put into circulation in it to come in contact with the catalyst, so as to decompose the organic molecules. However, according to this method, the shapes of the resulting carbon nanocoils were uneven, and the yield was low. It was therefore assumed that the production was incidental, that is, it was not reliable as industrial production. Therefore there has been a demand for a more efficient method.

In 1999, Li and some other researchers (W.Li,S.Xie,W.Liu,R.Zhao,Y.Zhang,W.Zhou and G.Wang,J.Material Sci.,34 (1999) 2745 (non-patent document 2)) succeeded to produce a new carbon nanocoil. According to their method, a catalyst constituted of a graphite sheet with a periphery coated with iron particles was placed in the center, and the vicinity of the catalyst was heated to 700°C by a nichrome wire. Then a mixture gas of 10% of acetylene and 90% of nitrogen gas in volume was brought into contact with the catalyst to be reacted with the catalyst. However, this method does not ensure a desirable coil yield, and was not sufficient as industrial production.

The key of increase in yield of carbon nanocoil in a CVD method is development of appropriate catalyst. In this view, a part of the inventors of the present invention developed a Fe, In, Sn type catalysts by which the yield increased to 90% or greater. The method is published in Japanese Laid-Open Patent Publication Tokukai 2001-192204 (Patent Document1). The catalyst was constituted of an ITO (Indium-Tin-Oxide) substrate on which a mixture thin film of In oxide and Sn oxide is formed and an iron thin film is formed thereon by vapor deposition.

Further, a part of the inventors of the present invention produces Fe, In, Sn type catalysts by an alternative method and succeeded to invent mass production of carbon nanocoil. The invention is disclosed in Japanese Laid-Open Patent Publication Tokukai 2001- 310130 (Patent Document 2). In this case, to produce the catalyst, In organic compound and a Sn organic compound was mixed with an organic solvent to prepare an organic liquid, and the organic liquid was applied on a substrate to form an organic film. Then the organic film was calcined to form a In/Sn oxide film, and an iron thin film was formed on the In/Sn oxide film. The In/Sn oxide film corresponds to the aforementioned ITO film (mixture thin film).

Furthermore, a part of the inventors of the present invention published a mass production method of carbon nanocoil by catalyst distribution (Japanese Laid-Open Patent Publication Tokukai 2003-26410 (Patent Document 3)). In this CVD method using catalyst vapor-phase transfer, a carbon hydride gas was supplied to a heated reactor and put into circulation, and the catalyst particles are dispersed in the gas. Then a carbon nanocoil was grown on the surfaces of catalyst particles while the carbon hydride is decomposed in the vicinity of the catalyst. This method using the dispersed catalyst allows highly-dense growth of a carbon nanocoil. By repeating growth and collection of carbon nanocoil, sequential production of carbon nanocoil becomes possible. Patent Document 1 and Patent Document 2 both teach a method of carbon nanocoil production in which a thin film of catalyst is deposited on a substrate carbon nanocoil catalyst. Patent Document 3 teaches a method of producing a carbon nanocoil by spraying catalyst microparticles into a reactor.

In 2004, Motojima and other researchers (Shaoming Yang, Xiuqin Chen and Seiji Motojima, Diamond and Related Materials 13 (2004) 85-92 (non-patent document 3)) carried out decomposition reaction of carbon nano structure in an acetylene-hydrogen-hydrogen sulfide-nitrogen gas reaction system with a catalyst of alloy so as to examine its structural feature. The product resulted from the process with an iron-rich alloy catalyst was a carbon nano fiber (CNF) of two-dimensional zigzag configuration. To particularly note that, under coexistence of Fe-38Cr-4Mn-4Mo alloy, the CNF of zigzag configuration was produced at a ratio of 20 to 50%, and the rest was twist carbon nanocoil. The non-patent document 3 classifies the zigzag configuration CNF into 6 types. In all of them, the zigzag configuration CNF is not less than 500nm in fiber width, and has a periodic structure which is regularly curved. In the periodic structure, the zigzag configuration CNF has sequential curves of 180 ° or greater.

[Patent Document 1] Tokukai 2001-192204

[Patent Document 2] Tokukai 2001-310130

[Patent Document 3] Tokukai 2003-26410

[Non-patent Document 1] Amelinckx, X.B.Zhang, D. Bernaerts, X. F. Zhang,V. Ivanov and J. B. Nagy, SCIENCE, 265(1994)635

[Non-patent Document 2] W. Li, S. Xie, W. Liu, R. Zhao,Y .Zhang, W. Zhou and G.Wang, J.Material Sci.,34 (1999)2745

[Non-patent Document 3] Shaoming Yang, Xiuqin Chen and Seiji Motojima, Diamond and Related Materials 13 (2004) 85-92

[Disclosure of Invention]

[Technical Problem]

The catalyst material is usually obtained by a catalyst manufacturer or refined in advance in a separate catalyst preparation process. However, regardless of whether the catalyst was obtained from a manufacturer or prepared in advance in a separate catalyst preparing process, the obtained catalyst microparticles are uneven in diameter and therefore the distribution of particle diameter varies. Even though the particle sizes of catalyst are even, the catalyst microparticles still tend to aggregate due to influences of surface condition of catalyst or humidity in the handling environment, which may cause the following drawback. For example, the catalyst contains secondary catalyst particles 1000nm or greater in diameter which do not contribute to grow a carbon nanocoil. In other case, the catalyst microparticles may excessively aggregate and form a big chunk. Since a carbon nano structure such as a carbon nanocoil grows on the surfaces of catalyst microparticles, the large particles included in the catalyst microparticles which are fairly dispersed in a reactor cause growth of carbon nano structure excessively large in linear diameter. As well as this, excessive aggregation of catalyst may result in unstable yield in the production of carbon nano structure. Moreover, collection of catalyst microparticles of a desired range of diameter requires an extra process, which increases the production cost.

In view of the foregoing problem, the present invention, as the first objective, provides a production method of carbon nano structure which allows stable mass production of carbon nano structure at low cost without influence of diameter variation of catalyst material, and a production device for carrying out the method. The present invention, as the second objective, also provides a carbon nano structure with a new configuration.

[Technical Solution]

The present invention is made in view of the foregoing problems. The first embodiment of the present invention is a carbon nano structure, which is a carbon nanotube 1nm to 300nm in linear diameter and has a curled state, said curled state is steric and has irregular folded points.

In addition to the feature of the first embodiment, the second embodiment of the present invention is further arranged so that a greatest peak of a diffraction profile on irradiation of Cu characteristic X-ray 1.54Å in wavelength corresponds to (002) reflection of a graphite crystal, said greatest peak exists in a range of 23° to 25° on 2θ, and a half bandwidth of said greatest peak ranges from 6° to 8° on 2θ.

In addition to the feature of the first or second embodiment, the third embodiment of the present invention is further arranged so that said the carbon nano structure which has curled state has two or more of said folded points when said carbon nanotube is folded substantially at 180 °.

The fourth embodiment of the present invention is a production device for producing a carbon nano structure by fluidizing a material gas and catalyst microparticles in a reactor so as to bring said material gas and said catalyst microparticles into contact with each other, said production device at least including selecting means for selecting a particle diameter of said catalyst microparticles, and supplying means for supplying catalyst microparticles selected by said selecting means to said reactor.

In addition to the feature of the fourth embodiment, the fifth embodiment of the present invention is further arranged so that said selecting means including suspending means for suspending said catalyst microparticles.

In addition to the feature of the fourth embodiment, the sixth embodiment of the present invention is further arranged so that the production device causes said suspending means to carry out suspension of said catalyst microparticles and then stops the suspension effect given by said suspending means so that said catalyst microparticles naturally or compulsively fall, so as to select the particle diameter.

In addition to the feature of the fourth embodiment, the seventh embodiment of the present invention is further arranged so that said supplying means is constituted of carrying means for carrying a fixed quantity of said selected catalyst microparticles to said reactor.

In addition to the feature of any one of the fourth to seventh embodiments, the eighth embodiment of the present invention further comprises carrier gas carrying means for supplying to said reactor said material gas and said catalyst microparticles by the carrier gas, said carrier gas carrying means introducing the carrier gas into said reactor so as to prevent pressure fluctuation of said reactor.

In addition to the feature of the fifth or sixth embodiment of the present invention, the ninth embodiment of the present invention is further arranged so that said suspending means is constituted of pulse gas supplying means for supplying a pulse gas to said catalyst containing section, said catalyst microparticles in said catalyst containing section are suspended by the instantaneous spraying of the high-pressure gas by said spraying means.

In addition to the feature of the fifth or sixth embodiment of the present invention, the tenth embodiment of the present invention is further arranged so that said suspending means is constituted of pulse gas supplying means for supplying a pulse gas to said catalyst containing section, said catalyst microparticles in said catalyst containing section are suspended by the spraying of the high-pressure gas by said spraying means.

In addition to the feature of the ninth or tenth embodiment of the present invention, the eleventh embodiment of the present invention is further arranged so that said gas supplying means intermittently sprays the gas, and suspended catalyst microparticles are left still when the spraying stops, so as to select the particle diameter of the catalyst microparticles.

In addition to the feature of the eleventh embodiment of the present invention, the twelfth embodiment of the present invention further comprises a catalyst carrying means for introducing into said reactor said catalyst microparticles suspended in said catalyst containing section by a carrier gas, after the particle diameter is selected.

In addition to the feature of the eleventh embodiment of the present invention, the thirteenth embodiment of the present invention further comprises changeover means for discharging a gas from said catalyst containing section into a region other than said reactor during the intermittent splaying of the gas, so as to at least avoid influence to pressure of said reactor.

In addition to the feature of the thirteenth embodiment of the present invention, the fourteenth embodiment of the present invention further comprises a carrier gas flow path which serves to reduce pressure fluctuation in said reactor by aerating said reactor with the carrier gas during the intermittent spraying of the pulse gas.

The fifteenth embodiment of the present invention is a production method of carbon nano structure in which a material gas and catalyst microparticles are fluidized to be brought into contact with each other in a reactor so as to produce a carbon nano structure, said method comprising the steps of (i) suspending said catalyst microparticles in a gas phase; and (ii) selecting a particle diameter; and (iii) supplying said catalyst microparticles selected in the step (ii) to said reactor.

In addition to the feature of the fifteenth embodiment of the present invention, the sixteenth embodiment of the present invention is further arranged so that in the step (ii) the particle diameter is selected by suspending said catalyst microparticles.

In addition to the feature of the fifteenth embodiment of the present invention, the sixteenth embodiment of the present invention is further arranged so that in the step (ii) the particle diameter is selected by suspending said catalyst microparticles, and then stopping the suspension effect so as to naturally or compulsively drop said catalyst microparticles.

In addition to the feature of the fifteenth embodiment of the present invention, the eighteenth embodiment of the present invention is further arranged so that a fixed quantity of said catalyst microparticles selected in step (ii) is carried to be supplied to said reactor.

In addition to the feature of any one of the fifteenth to eighteenth embodiments, the nineteenth embodiment of the present invention is further arranged so that said material gas and said catalyst microparticles are supplied to said reactor by the carrier gas, and the carrier gas is introduced into said reactor so as to prevent pressure fluctuation of said reactor.

In addition to the feature of the sixteenth or seventeenth embodiment, the twentieth embodiment of the present invention is further arranged so that said catalyst microparticles in said catalyst containing section are suspended by instantaneously spraying the high-pressure gas to said catalyst containing section.

In addition to the feature of the sixteenth or seventeenth embodiment, the twenty first embodiment of the present invention is further arranged so that said catalyst microparticles in said catalyst containing section are suspended by spraying the pulse gas to said catalyst containing section.

In addition to the feature of the twentieth or twenty first embodiment, the twenty second embodiment of the present invention is further arranged so that said catalyst microparticles suspended in said catalyst containing section are introduced into said reactor by a carrier gas, after the particle diameter is determined.

In addition to the feature of the twenty second embodiment, the twenty third embodiment of the present invention is further arranged so that said catalyst microparticles suspended in said catalyst containing section are introduced into said reactor by a carrier gas, after the particle diameter is selected.

In addition to the feature of the twenty second embodiment, the twenty fourth embodiment of the present invention is further arranged so that when the gas is intermittently sprayed into said catalyst containing section, the gas in said catalyst containing section is discharged into a region other than said reactor at least while the gas is emitted.

In addition to the feature of the twenty fourth embodiment, the twenty sixth embodiment of the present invention is further arranged so that when the gas is intermittently sprayed into said catalyst containing section, said reactor is aerated with a carrier gas through a gas flow path so as to reduce pressure fluctuation in said reactor.

[Advantageous Effect]

The first embodiment of the present invention provides a new carbon nano structure 1nm to 300nm in linear diameter, which has a curled state. The curled state is steric and has irregular folded points. The curled state may exist solely or with other types of carbon nano substances (the carbon nanotubes other than the curled type). The curled state is made of curled-like carbon nanotubes (may also referred to as curled-like CNT) intertwining each other.

The present invention was made as follows. First, the inventors of the present invention carried out experiments of efficient production of carbon nano structure in a small vertical reactor and found out that it is important to reduce "fluctuation of reaction field" by some manner, for example, by efficiently bringing catalyst powder suspended in the gas phase and carbon hydride gas such as $C_2H_2$ into contact with each other and stabilizing the pressure fluctuation or the carbon hydride gas concentration in the reactor. With the achievement of reduction in "fluctuation of reaction field" in a method using a dispersed catalyst, the inventors further succeeded to produce a carbon nano structure with uniform diameters of 1nm to 300nm by usage of catalyst adjusted to 1μm or less in particle diameter. The carbon nano structure contains the curled carbon nanotube 100nm or less in diameter at a high ratio, and the ratio may further be increased by adjusting the particle diameter of the catalyst and selecting the particle diameter. In this manner, the present invention provides a carbon nano structure 1nm to 100nm in diameter. Further, the present invention also achieved selective production of various carbon nano structures, such as carbon nanotube, carbon nanocoil etc., by using different kinds of catalyst powder. During such a study, the inventors of the present invention have found a carbon nano structure constituted of many curled-like carbon nanotubes intertwining each other. This curled-like carbon nano structure was discovered by the inventors of the present invention for the first time in the history.

According to the second embodiment of the present invention, a greatest peak of a diffraction profile on irradiation of Cu characteristic X-ray 1.54Å in wavelength corresponds to (002) reflection of a graphite crystal, said greatest peak exists in a range of 23° to 25° on 2θ. According to the fact that the greatest peak in the diffraction profile exists in a range of 23° to 25° on 2θ, the plane interval of the curled-like carbon nanotube crystals is estimated as 3.56Å to 3.86Å, with reference to the following Bragg's formula.

$$2d \cdot \sin\theta = \lambda \qquad (1)$$

In the figure, d denotes plane interval of the curled-like carbon nanotube crystal, θ denotes Bragg angle, λ denotes wavelength of Cu-characteristic X-ray: λ=1.54Å. Further, since the half bandwidth of said greatest peak is 6° to 8° on 2θ, the crystalline size of the curled-like carbon nanotube crystal in the peak is estimated to be in a range from 10.6Å to 14.1Å where 2θ = 23 °, according to the bandwidth of diffraction profile: $\beta_{1/2}$ and the following Scherrer's formula.

$$\beta_{1/2} = 0.94\lambda / (D \cdot \cos\theta) \qquad (2)$$

Further, according to the formula (2), the crystalline size of the curled-like carbon nanotube crystal ranges from 10.6Å to 14.2Å in the case where 2θ =25 °. According to this, the second embodiment of the present invention provides carbon nano structure in which the plane interval of the curled-like carbon nanotube crystals ranges from 3.56Å to 3.86Å, and the crystalline size of the curled-like carbon nanotube crystals ranges from 10.6Å to 14.1Å.

The third embodiment of the present invention provides a carbon nano structure in which said curled state has two or more of said folded points when said carbon nanotube is folded substantially at 180 °. There has conventionally been a carbon nano fiber curved substantially at 180 ° with a single folded point. In contrast, the curled-like carbon nanotube of the present invention is a new carbon nano structure including two or more folded points, each of which is curved stepwise, more specifically, it is curved substantially at 180 ° via plural folded points.

The fourth embodiment of the present invention provides a production device for producing a carbon nano structure by fluidizing a material gas and catalyst microparticles in a reactor so as to bring said material gas and said catalyst microparticles into contact with each other, said production device at least including selecting means for selecting a particle diameter of said catalyst microparticles, and supplying means for supplying catalyst microparticles selected by said selecting means to said reactor. This arrangement allows appropriate selection/control of particle diameter of said catalyst microparticles. Consequently, it becomes possible to control particle diameter of said catalyst microparticles within the production device. Since this arrangement is immune to influence of variation in particle diameter of catalyst microparticles contained in the catalyst material, it achieves stable mass production of carbon nano structure at low cost. Further, the foregoing arrangement also enables production of new type of carbon nano structures each of which is 1nm to 300nm in linear diameter and has a curled state, which is steric and has irregular folded points, as well as the production of various kinds of carbon nano structures.

The catalyst microparticles may be made only of a catalyst and/or of a catalyst held by a catalyst support. The type of catalyst is selected depending on the type of carbon nano structure to be produced. The examples of catalyst include a metal catalyst, an alloy catalyst, an oxide catalyst, and a carbon catalyst. Each of these catalysts may be held by a catalyst support, such as a porous material.

In addition to the feature of the fourth embodiment, the fifth embodiment of the present invention provides a production device for carbon nano structure in which said selecting means including suspending means for suspending said catalyst microparticles. This suspending means has a function of selecting light-weighted particles, in other words, particles with small diameters contained in the catalyst material by suspending the small particles, and thereby supply only the target small particles to the reactor as a catalyst of carbon nano structure production. With this arrangement which is immune to influence of variation in particle diameter of catalyst microparticles contained in the catalyst material, the present invention provides a production device capable of stable mass production of carbon nano structure at low cost. Further, said suspending means may be a kind of means for spraying a gas, giving supersonic vibration, or stirring the catalyst microparticles accumulated in the catalyst containing section. The catalyst microparticles in the catalyst containing section are compulsively suspended by being by blown upward by these means. In this way selection of the particle diameter of the catalyst microparticles is efficiently carried out. Besides, it is possible to keep the catalyst containing section from contamination by impurities or the like which comes from mechanical components etc.

In addition to the feature of the fifth embodiment, the sixth embodiment of the present invention is further arranged so that the production device causes said suspending means to carry out suspension of said catalyst microparticles and then stops the suspension effect given by said suspending means so that said catalyst microparticles naturally or compulsively fall, so as to select the particle diameter. In the case of natural-fall, only the light-weighted catalyst microparticles are accurately selected using the difference in sedimentation velocity on the natural-fall of catalyst microparticles. In this way, only the light-weighted particles are selected among the various catalyst particles to be supplied to the reactor. The present invention thus realizes a production device capable of stable mass production of carbon nano structure at low cost. Further, in the case of compulsive-fall, charged catalyst microparticle is supplied with an electromagnetic field, and thereby compulsively falls, for example. In this case the selection of particle diameter can be rapidly carried out.

In addition to the feature of the fourth embodiment, the seventh embodiment of the present invention is further arranged so that said supplying means is constituted of carrying means for carrying a fixed quantity said selected of catalyst microparticles to said reactor. This arrangement allows stable supply of catalyst microparticles with desired particle diameters to said reactor. On this account, the present invention provides a production device capable of stable mass production of carbon nano structure at low cost.

In addition to the feature of any one of the fourth to seventh embodiments, the eighth embodiment of the present invention further comprises carrier gas carrying means for supplying to said reactor said material gas and said catalyst microparticles by the carrier gas, said carrier gas carrying means introducing the carrier gas into said reactor so as to prevent pressure fluctuation of said reactor. With this arrangement, the catalyst microparticles selected based on the particle diameter are introduced to said reactor together with said material gas so as to prevent pressure fluctuation in the reactor. Therefore, fluctuation of reaction field required for the growth of carbon nano structure is prevented. This arrangement enables stable dispersion supply of catalyst microparticles with desired particle diameters to said reactor. On this account, the present invention provides a production device capable of high-yield serial production of carbon nano structure.

In addition to the feature of the fifth or sixth embodiment of the present invention, the ninth embodiment of the present invention is further arranged so that said suspending means is constituted of high-pressure gas supplying means for supplying a high-pressure gas to said catalyst containing section, said catalyst microparticles in said catalyst containing section are suspended by the instantaneous spraying of the high-pressure gas by said spraying means. This arrangement allows the catalyst microparticles to be compulsively blown up efficiently in said catalyst containing section, regardless of the residue amount of catalyst microparticles. On this account the present invention provides a production device useful for serial production of carbon nano structure.

In addition to the feature of the fifth or sixth embodiment of the present invention, the tenth embodiment of the present invention is further arranged so that said suspending means is constituted of pulse gas supplying means for supplying a pulse gas to said catalyst containing section, said catalyst microparticles in said catalyst containing section are suspended by the spraying of the pulse gas by said spraying means. This arrangement enables easy adjustment of suspending condition according to the desired suspension state by changing pulse interval or the like upon supplying the pulse gas, thereby reducing production cost of carbon nano structure.

In addition to the feature of the ninth or tenth embodiment of the present invention, the eleventh embodiment of the present invention is further arranged so that said gas supplying means intermittently sprays the gas, and suspended catalyst microparticles are left still when the spraying stops, so as to select the particle diameter of the catalyst microparticles. This arrangement carries out accurate selection of catalyst microparticles varied in diameter by using the difference in sedimentation velocity of the suspended particles when the catalyst microparticles are left still. On this account, the present invention provides a production device capable of high-yield serial production of carbon nano structure.

In addition to the feature of the eleventh embodiment of the present invention, the twelfth embodiment of the present invention further comprises a catalyst carrying means for introducing into said reactor said catalyst microparticles suspended in said catalyst containing section by a carrier gas, after the particle diameter is selected. With this arrangement including the catalyst carrying means, the step of selecting particle diameter and the step of supplying the catalyst particles to said reactor may be sequentially carries out. On this account, the present invention provides a production device capable of high-yield production of carbon nano structure, thereby achieving mass production of carbon nano structure.

In addition to the feature of the eleventh embodiment of the present invention, the thirteenth embodiment of the present invention further comprises changeover means for discharging a gas from said catalyst containing section into a region other than said reactor at least during emission of gas in the intermittent splaying of the gas. In this way influence to pressure of said reactor is avoided. With this arrangement, the gas in said catalyst containing section is discharged by said changeover means into a region other than the reactor upon the intermittent spray of gas, and the selection of particle diameter in said catalyst containing section may be carried out without causing influence to the reaction field in said reactor. This arrangement allows selection of particle diameter of the catalyst microparticles in said catalyst containing section without interfering the flow of the sequential steps before the reaction. On this account, the present invention provides a production device capable of mass production of carbon nano structure.

In addition to the feature of the thirteenth embodiment of the present invention, the fourteenth embodiment of the present invention further comprises a carrier gas flow path which serves to reduce pressure fluctuation in said reactor by aerating said reactor with a carrier gas during the intermittent spraying of the gas. With this arrangement, said reactor is aerated with a carrier gas when the gas is intermittently supplied to reduce pressure fluctuation in the reactor. In this way the selection of the particle diameter of the catalyst microparticles in said catalyst containing section can be carried out without interfering the reaction field of said reactor. This arrangement allows selection of particle diameter of the catalyst microparticles in said catalyst containing section without interfering in the flow of the sequential steps before the reaction. On this account, the present invention provides a production device capable of mass production of carbon nano structure.

The fifteenth embodiment of the present invention is a production method of carbon nano structure in which a material gas and catalyst microparticles are fluidized to be brought into contact with each other in a reactor so as to produce a carbon nano structure, said method comprising the steps of (i) suspending said catalyst microparticles in a gas phase; and (ii) selecting a particle diameter; and (iii) supplying said catalyst microparticles selected in the step (ii) to said reactor. With this arrangement, the particle diameter of said catalyst microparticles is selected in the step (ii) before the particles are supplied to said reactor. With this arrangement the present invention achieves stable mass production of carbon nano structure at low cost regardless of particle size distribution of catalyst microparticles of the catalyst material.

In addition to the feature of the fifteenth embodiment of the present invention, the sixteenth embodiment of the present invention is further arranged so that in the step (ii) the particle diameter is selected by suspending said catalyst microparticles. In this way, only the light-weighted particles, in other words, only the particles with small diameters are selected among the various catalyst particles of the catalyst material to be supplied to the reactor as the catalyst for producing carbon nano structure. With this arrangement the present invention achieves stable mass production of carbon nano structure at low cost regardless of particle size distribution of catalyst microparticles of the catalyst material.

In addition to the feature of the fifteenth embodiment, the seventeenth embodiment of the present invention is further arranged so that said catalyst microparticles are suspended and then the suspension effect is stopped so that said catalyst microparticles naturally or compulsively fall, so as to select the particle diameter. In this way, the microparticles are suspended and then the suspension effect is stopped. Accordingly, only the catalyst microparticles with small diameters are accurately selected using the difference in sedimentation velocity on the natural or compulsive fall, which depends on the particle diameter. The present invention thus realizes stable mass production of carbon nano structure at low cost.

In addition to the feature of the fifteenth embodiment, the eighteen embodiment of the present invention is further arranged so that a fixed quantity of selected catalyst microparticles are supplied to said reactor. This arrangement allows stable supply of catalyst microparticles with desired particle diameters to said reactor. On this account, the present invention achieves stable mass production of carbon nano structure at low cost.

In addition to the feature of any one of the fifteenth to eighteenth embodiments, the nineteenth embodiment of the present invention is further arranged so that said material gas and said catalyst microparticles are supplied to said reactor by the carrier gas, and the carrier gas is introduced into said reactor so as to prevent pressure fluctuation of said reactor. With this arrangement, the catalyst microparticles selected based on the particle diameter are introduced to said reactor together with said material gas so as to prevent pressure fluctuation in the reactor. Therefore, fluctuation of reaction field required for the growth of carbon nano structure is prevented. This arrangement enables stable dispersion supply of catalyst microparticles with desired particle diameters to said reactor. On this account, the present invention realizes high-yield serial production of carbon nano structure.

In addition to the feature of the sixteenth or seventeenth embodiment of the present invention, the twenty first embodiment of the present invention is further arranged so that a high-pressure gas is supplied to said catalyst containing section, said catalyst microparticles in said catalyst containing section are suspended by the instantaneous spraying of the high-pressure gas. This arrangement allows the catalyst microparticles to be compulsively blown up efficiently in said catalyst containing section, regardless of the residue amount of catalyst microparticles. On this account the present invention achieves efficient serial production of carbon nano structure.

In addition to the feature of the sixteenth or seventeenth embodiment of the present invention, the twenty first embodiment of the present invention is further arranged so that said a pulse gas is sprayed to said catalyst containing section, said catalyst microparticles in said catalyst containing section are suspended by the instantaneous spraying of the pulse gas. This arrangement enables easy adjustment of suspending condition according to the desired suspension state by changing pulse interval or the like upon supplying the pulse gas, thereby reducing production cost of carbon nano structure.

In addition to the feature of the twentieth or twenty first embodiment of the present invention, the twenty second embodiment of the present invention is further arranged so that the selection of particle diameter of the catalyst microparticles is carried out by intermittently spraying the gas, and placing still the suspended catalyst microparticles when the spraying of gas is stopped. This arrangement carries out accurate selection of catalyst microparticles varied in diameter by using the difference in sedimentation velocity of the suspended particles when the catalyst microparticles are left still. On this account, the present invention achieves high-yield serial production of carbon nano structure.

In addition to the feature of the twenty second embodiment of the present invention, the twenty third embodiment of the present invention is further arranged so that said catalyst microparticles suspended in said catalyst containing section are introduced into said reactor by a carrier gas, after the particle diameter is selected. With this arrangement including the catalyst carrying means, the step of selecting particle diameter and the step of supplying the catalyst particles to said reactor may be sequentially carries out. On this account, the present invention achieves high-yield production of carbon nano structure, thereby achieving mass production of carbon nano structure.

In addition to the feature of the twenty second embodiment of the present invention, the twenty fourth embodiment of the present invention is further arranged so that the gas from said catalyst containing section is discharged into a region other than said reactor at least during emission of gas in the intermittent splaying of the pulse gas. In this way influence to pressure of said reactor is prevented. With this arrangement, the gas in said catalyst containing section is discharged into a region other than the reactor upon the intermittent spray of gas, and the selection of particle diameter in said catalyst containing section may be carried out without causing influence to the reaction field in said reactor. This arrangement allows selection of particle diameter of the catalyst microparticles in said catalyst containing section without interfering in the flow of the sequential steps before the reaction. On this account, the present invention contributes smooth mass production of carbon nano structure.

In addition to the feature of the twenty fourth embodiment of the present invention, the twenty fifth embodiment of the present invention is further arranged so that said reactor is aerated with a carrier gas via a gas flow path during the intermittent spraying of the pulse gas, so that pressure fluctuation in the reactor is reduced. With this arrangement, said reactor is aerated with a carrier gas when the gas is intermittently supplied to reduce pressure fluctuation in the reactor. In this way the selection of the particle diameter of the catalyst microparticles in said catalyst containing section can be carried out without interfering in the reaction field of said reactor. This arrangement allows selection of particle diameter of the catalyst microparticles in said catalyst containing section without interfering in the flow of the sequential steps before the reaction. On this account, the present invention contributes smooth mass production of carbon nano structure.

[Brief Description of the Drawings]

[Figure 1] A drawing showing a schematic structure of the entire production device for producing carbon nano structures of the present invention.

[Figure 2] A magnified schematic explanatory view of the portion "A" of Figure 1.

[Figure 3] A drawing showing a schematic structure of a control system containing an automatic valve control section 50, used for a production device of the present invention.

[Figure 4] A drawing showing a measurement result of catalyst powder carrying amount with respect to a pulse irradiation time, which is one of the verification experiments of the condition of catalyst suspending process according to the present invention.

[Figure 5] A drawing showing a measurement result of catalyst powder carrying amount with respect to a pulse irradiation cycle time interval, which is another verification experiment of the condition of catalyst suspending process.

[Figure 6] A drawing showing a measurement result of catalyst powder carrying amount with respect to a stationary rest time, which is still another verification experiment of the condition of catalyst suspending process.

[Figure 7] A drawing showing a particle diameter with respect to a degree, which denotes a microparticle diameter distribution state in the catalyst suspending process of the present invention.

[Figure 8] A drawing showing a particle diameter with respect to a degree, which denotes a microparticle diameter distribution state of a catalyst material used for the catalyst suspending process of the present invention.

[Figure 9] A SEM image showing a manufacturing method of a carbon nano structure of the present invention.

[Figure 10] A drawing showing a linear diameter with respect to a degree, which denotes a linear diameter distribution of the carbon nano structure, measured by the SEM image.

[Figure 11] A SEM (scanning electron microscope) image of a carbon nano structure constituted only of curled tubes.

[Figure 12] A TEM (transmission electron microscope) image of a carbon nano structure constituted only of curled tubes.

[Figure 13] A X-ray diffraction profile of a curled-like carbon nanotube (curled-like CNT) of the present invention.

[Reference Numerals]

| 1 | reactor |
| 2 | catalyst storage tank |
| 3 | material and catalyst supplying tube path |
| 4 | (material and catalyst supplying tube path3) reactor introduction front end section |
| 5 | gas introduction path |
| 6 | discharge path |
| 7 | collection tank |
| 8 | discharge tube |
| 9 | catalyst supplying tube |
| 10 | material gas supplying tube |
| 11 | gas supplying path |
| 12 | heat applicator |
| 13 | high-pressure pulse gas introduction tube |
| 14 | gas introduction path |
| 15 | gas discharge tube |
| 16 | helium compressed gas cylinder |
| 17 | flow rate regulator |
| 18 | open/close valve |
| 19 | high-pressure pulse gas generation/ storage section |
| 20 | helium compressed gas cylinder |
| 21 | flow rate regulator |
| 22 | open/close valve |
| 23 | gas flow rate controller |
| 24 | filter |
| 25 | safe valve |
| 27 | helium compressed gas cylinder |
| 28 | flow rate regulator |
| 29 | open/close valve |
| 30 | gas flow rate controller |
| 31 | material compressed gas cylinder |
| 32 | flow rate regulator |
| 33 | open/close valve |

34  gas flow rate controller
35  open/close valve
36  helium compressed gas cylinder
37  flow rate regulator
38  open/close valve
39  gas flow rate controller
41  acetone
42  catalyst material powder
50  automatic valve control section
51  sequencer
V1  electromagnetic open/close valve
V2  electromagnetic three-way valve
V3  electromagnetic three-way valve

[BEST MODE FOR CARRYING OUT THE INVENTION]

With reference to the attached drawings, the following explains details of a production device for a carbon nano structure, such as carbon nanocoil, according to the present invention, and a production method of a carbon nano structure using the device.

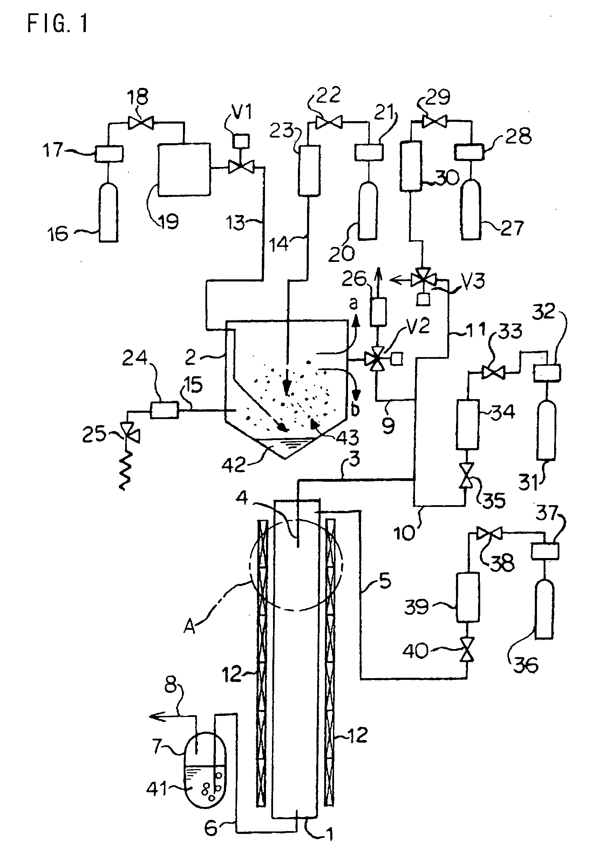

Figure 1 shows an entire part of the production device for a carbon nano structure according to the present invention. This production device carries out a CVD method using catalyst vapor-phase transfer.

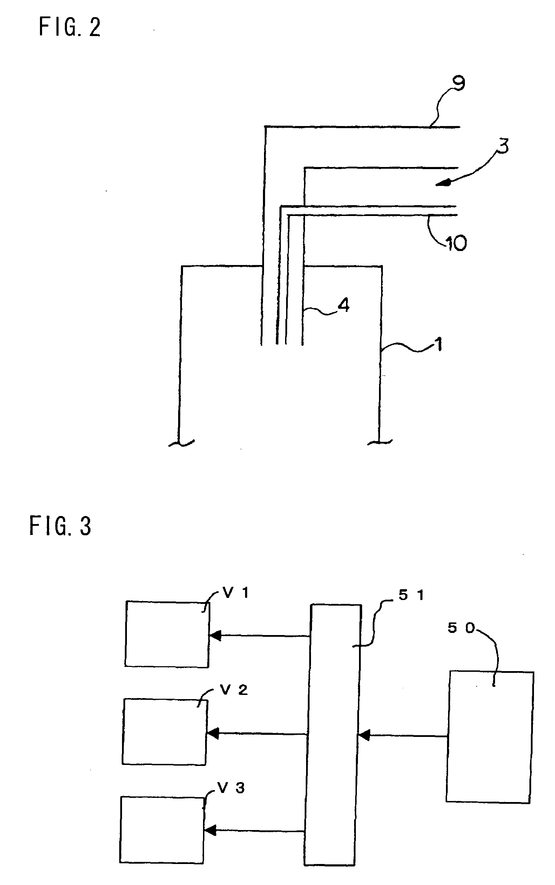

A reactor 1 is made of a vertical quartz tube, and includes in its periphery a heat applicator 12 for thermally decomposing a material gas. The heat applicator 12 resides along the vertical longitudinal direction of the reactor 1. The reactor 1 is supplied with a material, and is also supplied with a material gas and a catalyst via a catalyst supplying tube path 3 together with a carrier gas. Figure 2 shows a reactor introduction front end section 4 of the material and catalyst supplying tube path 3. The material and catalyst supplying tube path 3 has a double tube structure with a catalyst supplying quartz tube 9, and a material gas supplying SUS tube 10 which is contained in the catalyst supplying tube 9. The material gas and the catalyst in a dispersion state which are introduced in the reactor 1 via the reactor introduction front end section 4 come in contact with each other in a gas phase and are decomposed by heat in the thermal atmosphere given by the heat applicator 12. As a result, a part of the material gas is converted into a carbon nano structure on the surface of the catalyst microparticles. In this way, a carbon nano structure grows. The material gas supplying tube 10, which serves as material gas supplying means, is constituted of a material gas compressed cylinder 31, a flow rate regulator 32 provided on the gas-discharge end of the material gas compressed cylinder 31, an open/close valve 33, a gas flow rate controller 34 made of a mass flow controller, and an open/close valve 35.

Apart from carbon hydride, suitable examples of the material gas includes a sulfur-containing organic gas, phosphorous-containing organic gas, or any other organic gases useful for generation of carbon nano structure. The carbon hydride is suitable in a sense that it does not generate unwanted substances. Examples of carbon hydride include an alkane compound such as methane, ethane, etc., alkene compound such as ethylene, butadiene, etc.,; an alkine compound such as acetylene; an aryl carbon hydride compound such as benzene, toluene, styrene, etc.; aromatic carbon hydride compound with a condensed ring such as indene, naphthalene, phenanthrene, etc.; a cycloparaffin compound such as cyclopropane, cyclohexane, etc.; a cycloolefin compound such as cyclopentene; and an alicyclic carbon hydride compound having a condensed ring such as steroid. Further, a mixture carbon hydride gas made of two or more kinds of the foregoing gases may also be used. Among the various carbon hydrides, particularly preferred are low-molecular-weight carbon hydrides such as acetylene, arylene, ethylene, benzene, and toluene. Particularly for the acetylene, a highly pure material is suitable, but a material resulted from purification of a general dissolved acetylene or a general dissolved acetylene may also be used. Further, it may be obvious but the carbon hydride may contain acetone, DMF(dimethyl formamide, $HCON(CH3)2$) or the like which serves as the solvent of the dissolved acetylene. The carrier gas compressed cylinders 16, 20, 27 and 36 each contain helium gas, but they otherwise may contain an inactive gas such as Ar, Ne, Kr, $CO_2$, $N_2$, or Xe. Further, the carrier gas is not always required to be constituted of a single component, but may be made of a combination of two or more gases. Also, the carrier gas may contain a sub-component, whose content is however usually very small compared with the main component.

The reactor 1 connected to the material and catalyst supplying tube path 3 is also connected to a gas introduction path 5 for supplying a carrier gas into the reactor 1. Since a vertical reactor is generally supplied with a catalyst or a material gas from its upper portion, its temperature distribution is such that the temperature is low in the lower portion and the convection causes an upward flow of gas. Since the upward flow of gas interferes in the catalyst and the material gas in smoothly flowing downward, 60SCCM of helium carrier gas is supplied from an introduction path 5 to prevent the upward flow of gas due to the convention. In this way, the reaction growth of the carbon nano structure is efficiently facilitated. This upward flow preventing gas supplying means is constituted of a helium gas compressed cylinder 36, a flow rate regulator 37 provided on the gas-discharge end of the helium gas compressed cylinder 36, an open/close valve 38, a gas flow rate controller 39 made of a mass flow controller, and a gas introduction path 5.

A discharge path 6 is provided on a lower end of the reactor 1. The discharge end of the collection tank 7 is introduced to the discharge path 6. The collection tank 7 contains an acetone 41. Unreacted material gas or carrier gas which did not contribute to the reaction growth of carbon nano structure is distributed in the acetone 41 of the collection tank 7, and then is discharged from the discharge tube 8 of the collection tank 7. The carbon nano structure having been produced in the reactor 1 is discharged from the discharge path 6, and then the carbon nano structure undissolved to the acetone 41 is collected to the collection tank 7 by the bubbling method. The carbon nano structure having been collected to the collection tank 7 is taken out by being separated from the acetone.

The catalyst storage tank 2 serves as a catalyst containing section for selecting the particle diameter of catalyst microparticles. The catalyst storage tank is filled with about 50g of catalyst material powder 42. The storage tank may be provided with a commercially-available general screw feeder for regularly supplying material powder. The catalyst storage tank 2 therein contains a high-pressure pulse gas introduction tube 13 for suspending the catalyst. A helium compressed gas cylinder 16, a flow rate regulator 17 provided on the gas-discharge end of the helium gas compressed cylinder 16, an open/close valve 18, a high-pressure pulse gas generation/ storage section 19, an electromagnetic open/ close valve V1 and the high-pressure pulse gas introduction tube 13 constitute suspension effect means. The catalyst suspension effect means includes a spraying means which generates 0.3MPa high-pressure helium gas in the form of a pulse using the helium gas in the gas storage section 19 by intermittent opening/closing operation of the electromagnetic open/close valve V1, and sprays the helium gas from the front end of the high-pressure pulse gas introduction tube 13. The opening/closing operation of the electromagnetic open/close valve V1 is controlled by an automatic valve control section 50 (shown in Figure 3) via a sequencer 51. The frequency of the operation ranges from once a day to 10000 times a minute. However, considering the productivity of carbon nanocoil, a range from once to 1000 times a minute is more preferable. Though it is not shown in figures, the automatic valve control section 50 is constituted of a microcomputer control section, which transmits a valve open/close control signal to the sequencer 51 in accordance with a built-in valve control program. The sequencer 51 receives a signal indicating open/close or switchover operation from the microcomputer control section, and transmits the open/close or switchover signal to each valve control section of the electromagnetic open/close valve V1, an electromagnetic three-way valve V2, or V3 (described later). The high-pressure pulse gas is sprayed from the front end of the high-pressure pulse gas introduction tube 13 into the catalyst accumulated in the catalyst storage tank 2 so as to suspend the catalyst microparticles. The catalyst storage tank 2 includes catalyst carrying means which carries the suspended catalyst microparticles by a helium carrier gas to the catalyst supplying tube 9, thereby supplying the particles to the reactor 1. The catalyst carrying means is constituted of a helium gas compressed cylinder 20, a flow rate regulator 21 provided on the gas-discharge end of the helium gas compressed cylinder 20, an open/close valve 22, a gas flow rate controller 23 made of a mass flow controller, and a gas introduction path 14 for introducing a carrier gas to the catalyst storage tank 2. The present embodiment uses a helium gas as a high-pressure pulse gas for causing suspension of particles, in addition to the carrier gas for carrying the catalyst or material gas. Note that, apart from the helium gas, inactive Ar, Ne, Kr, $CO_2$, $N_2$, Xe etc. may also be used as the carrier gas. Further, the carrier gas may be constituted of a single composition or a combination of plural gases of the foregoing examples. Also, it may be obvious but the carrier gas may contain a sub-component whose amount is very small compared with the main component. In contrast to the material gas which is generally consumed by reaction, the carrier gas serving to carry the material gas or the catalyst causes no reaction and is not consumed. However, as mentioned, the carrier gas may contain a sub-component whose amount is very small compared with the main component, and the sub-component may cause reaction and may be consumed.

The following explains sedimentation time of the catalyst microparticles using a calculation model. The relation between the particle diameter and the sedimentation time of the catalyst microparticles was examined based on the following Stokes' sedimentation formula ES.

$$Ut=D^2 (\rho s-\rho t) g/18\mu \cdot \cdot \cdot \cdot \cdot \cdot ES$$

Ut:sedimentation velocity (termination velocity)(m/s)
D :particle diameter (m)
ps: particle density ($kg/m^3$)
pt: fluid density (kg/ m3)
g :gravity acceleration($m/s^2$)
$\mu$ :fluid viscosity coefficient (kg/m · s)

Assuming iron microparticles and helium fluid, sedimentation velocity was calculated according to the foregoing formula ES in two cases where the particle diameter is 0.1$\mu$m and 1$\mu$m. The result showed that the sedimentation velocity of the iron microparticles in helium was about $10^{-7}$m/s in the case where the particle diameter was $0.1\mu$m, and was about $10^{-5}$m/s in the case where the particle diameter was $1\mu$m. That is, the model calculation showed that the microparticles are substantially suspended and the sedimentation velocity in fluid is the same as the gas flow rate. Accordingly, in supplying a catalyst into a reactor, it is preferable to directly introduce catalyst microparticles suspended in advance in a gas into the reactor under heating.

As shown in the model calculation, the sedimentation velocity increases as the particle diameter increases, and therefore the catalyst microparticles 43 having been brought into suspension state by the high-pressure pulse gas sprayed from the front end of the high-pressure pulse gas introduction tube 13 freely fall by gravity. Heavy particles with large diameters settle faster than particles with small diameters, and are accumulated again in the catalyst storage tank 2. With this difference in sedimentation velocity, the particle diameter of the catalyst microparticle was easily and accurately selected. More specifically, with the foregoing suspension manner microparticles of small diameters used for generation of carbon nano structure are selected. The selected catalyst microparticles are lead to the reactor 1 via the supplying tube 9.

A different catalyst is used depending on the type of carbon nano structure. Suitable examples of catalyst include iron, cobalt, nickel, iron alloy, cobalt alloy, nickel alloy, iron oxide, cobalt oxide, and nickel oxide. These materials may be used solely or in combination. Particularly preferable in the production of carbon nanocoil is a three-component catalyst obtained by adding Indium (In), Aluminum (Al), and Chrome (Cr) to a iron-tin type composition, for example, a mixture catalyst such as Fe-In-Sn-O, Fe-A1-Sn-O, or Fe-Cr-Sn-O.

The catalyst storage tank 2 includes a catalyst stable supply means, which serves to keep the reaction field of the reactor 1 stable while the catalyst is suspended, and the suspended catalyst microparticles having been selected are carried and supplied to the reactor 1. The catalyst stable supply means is constituted of an electromagnetic three-way valve V2 which is provided on the side where the catalyst supplying tube 9 is provided and is switched by an automatic valve control section 50 (shown in Figure 3), and a second catalyst carrying means which is provided on the side where the catalyst supplying tube 9 is provided and carries and supplies suspended catalyst microparticles to the reactor 1 by the second carrier gas. The second catalyst carrying means is constituted of a helium compressed gas cylinder 27, a flow rate regulator 28 provided on the gas discharge end of the helium compressed gas cylinder 27, an open/close valve 29, a gas flow rate controller 30 constituted of a mass flow controller, and an electromagnetic three-way valve V3 switched by an automatic valve control section 50. The electromagnetic three-way valve V2 is controlled by the automatic valve control section 50 via a sequencer 51 so that it is selectable between (i) a stop mode in which the catalyst supply to the reactor 1 stops and (ii) a supply mode in which the catalyst supply to the reactor 1 is carried out. The electromagnetic three-way valve V2 is switched into the stop mode during the step for suspending the catalyst by the spraying of a high-pressure pulse gas by the intermittent opening/closing operation of the electromagnetic open/ close valve V1 and in the subsequent stationary-rest step. Meanwhile, as shown in the arrow "a" of Figure 1, the gas in the catalyst storage tank 2 is not lead to the catalyst supplying tube 9, but is lead to the discharge path via the filter 26. At this time, the electromagnetic three-way valve V3 is switched into the supply mode in which the carrier gas of the helium compressed gas cylinder 27 is supplied to the reactor 1 via the gas supplying path 11 which is merged with the catalyst supplying tube 9. With this arrangement, the pressure in the gas flow path to the reactor 1 is kept at the same level even though the electromagnetic three-way valve V2 is in the stop mode under which the supply of carrier gas from the helium compressed gas cylinder 20 is suspended.

Then, after the suspension and stationary-rest of catalyst by the spraying of high-pressure pulse gas, as shown by the arrow "b" of Figure 1, the electromagnetic three-way valve V2 is switched to the supply mode, leading the suspended catalyst microparticles in the catalyst storage tank 2 to the reactor 1 via the catalyst supplying tube 9 using a carrier gas supplied from the helium compressed gas cylinder 20. At this time, the electromagnetic three-way valve V3 is switched to the carrier gas discharge state in which it is opened to a gas flow path for discharging the carrier gas from the helium compressed gas cylinder 27 so that the catalyst carriage is carried out only by the carrier gas from the helium compressed gas cylinder 20. With the catalyst stable supply means, it becomes possible to maintain the pressure at a certain level without pressure fluctuation both in the supply mode under which the selected catalyst microparticles are supplied, and in the stop mode under which the catalyst is being suspended and the catalyst microparticles are not supplied. That is, if the carriage of catalyst is carried on without blocking the gas distribution to the catalyst supplying tube 9 in the catalyst suspending operation, pressure fluctuation occurs due to the spraying of the high-pressure pulse gas, and this pressure fluctuation is propagated to the reactor 1 and disturbs the reaction field, thereby interfering stable growth of carbon nano structure. However, according to the present embodiment, in the case of carrying out selecting process of the diameter of the catalyst microparticle at the preceding stage, the gas distribution is maintained by the carrier gas supplied from the helium compressed gas cylinder 27 by the catalyst stable supply means even when the preceding stage is blocked. Therefore the reaction field of the reactor 1 is not disturbed, and stable sequential production of carbon nano structure is ensured.

Next, the following explains an experiment in the foregoing production device for examining condition of the catalyst suspending operation by the opening and closing of electromagnetic open/close valve V1, and the electromagnetic three-way valves V2 and V3, which are operated by the automatic valve control section 50.

<Experiment 1>

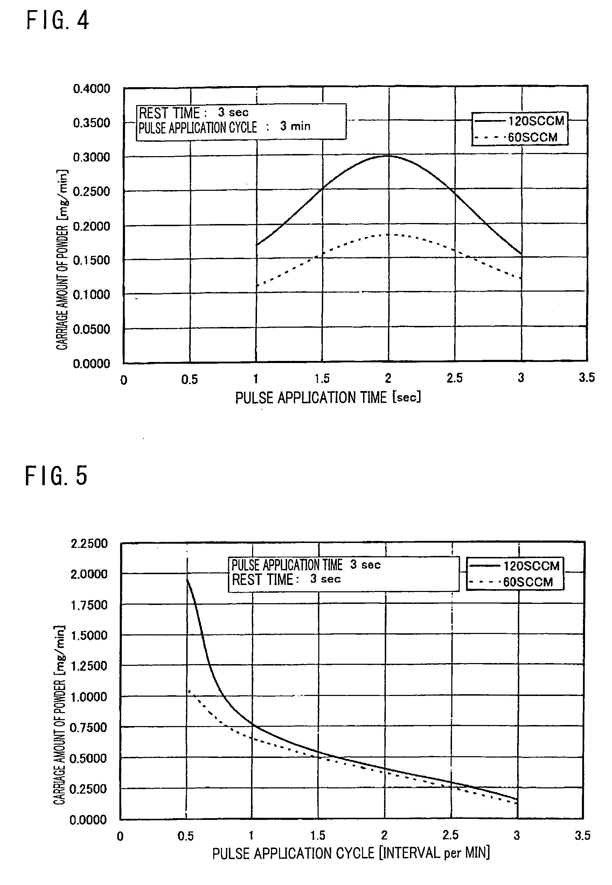

First, the catalyst suspension was carried out with a 0.3MPa high-pressure pulse gas which was generated by intermittent opening and closing of an electromagnetic open/close valve V1, which was 600 times a minute. The high-pressure pulse gas was sprayed from the front end of the high-pressure pulse gas introduction tube 13 so as to be applied to the catalyst in the catalyst storage tank 2. This operation was carried out three times with the applications of high-pressure gas for a second, 2 seconds, and 3 seconds, respectively. After the suspension process, the application of the high-pressure pulse gas was stopped, and the catalyst was left still for 3 seconds. Under such a suspension/stationary-rest condition, the amount of suspended catalyst being carried to the reactor 1 was measured under different flow rates of carrier gas supplied from the helium compressed gas cylinder 20: 60SCCM and 120SCCM, respectively. Figure 4 shows the measurement result. A catalyst of Fe-In-Sn-O was used in this experiment.

As can be seen in the measurement result of particle carrying amount and the application time of the high-pressure pulse gas shown in Figure 4, the carrying amount of the catalyst particles decreases as the application time of the high-pressure pulse gas decreases. Accordingly, the optimal application time of the high-pressure pulse gas was determined to be three seconds.

<Experiment 2>

The high-pressure pulse gas was applied for three seconds, and then the catalyst was left still for three seconds. The suspended catalyst was then carried by a carrier gas for a predetermined time. After that, the operation cycle of the step of three minutes pulse application and stationary rest, that is, the carrier time interval, in other words, the pulse application cycle time was changed to 0.5, 1, and three minutes. Otherwise, the same condition as that of Experiment 1 was used. Under such a suspension/stationary-rest condition, the amount of suspended catalyst being carried to the reactor 1 was measured with the two flow rates of carrier gas: 60SCCM and 120SCCM. Figure 5 shows the measurement result.

According to the measurement result of the carriage amount of catalyst and the pulse application cycle shown in Figure 5, the optimal application time of the high-pressure pulse gas was determined to be three seconds.

<Experiment 3>

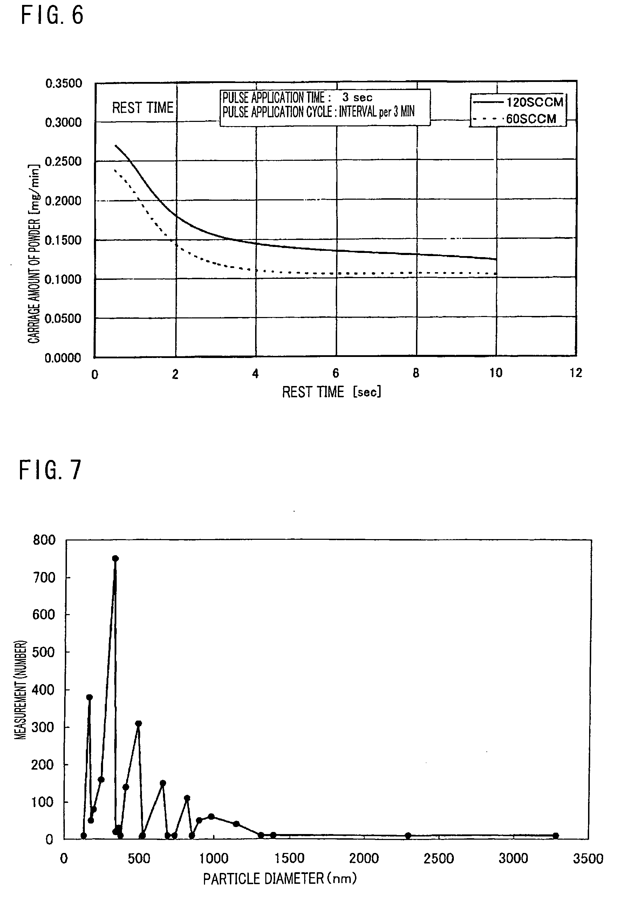

The high-pressure pulse gas was applied for three seconds, and then the catalyst was left still for 0.5 second, 3 seconds, and 10 seconds after the high-pressure pulse gas application, respectively. Otherwise, the same conditions as those of Experiments 1 and 2 were used. Under such a suspension/ stationary-rest condition, the amount of suspended catalyst being carried to the reactor 1 was measured with the two flow rates of carrier gas: 60SCCM and 120SCCM. Figure 6 shows the measurement result.

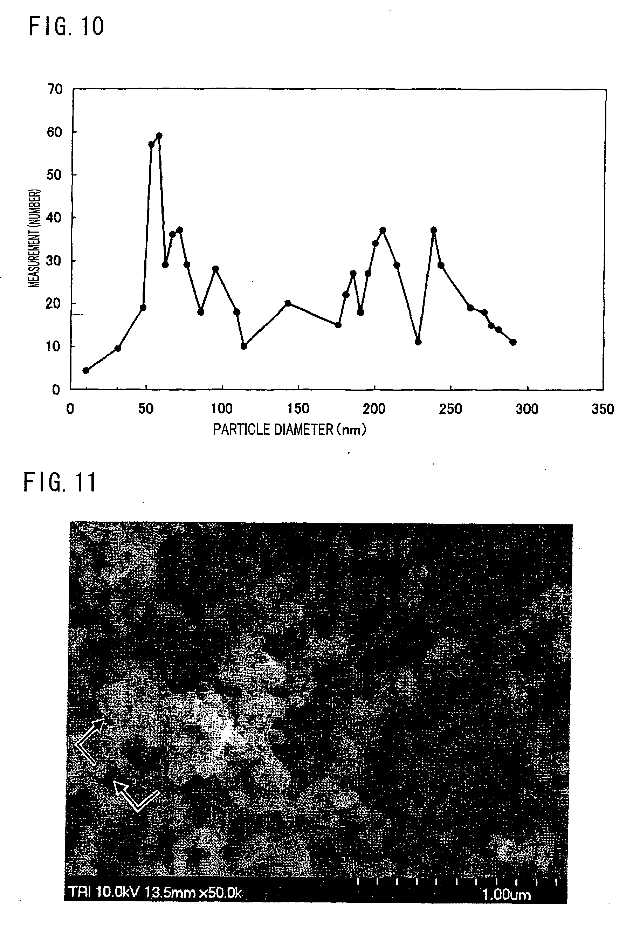

According to the measurement result of the carriage amount of catalyst and the duration of stationary-rest shown in Figure 6, 10 seconds of rest causes sedimentation of the catalyst. The optimal application time of the high-pressure pulse gas was determined to be three seconds.

A safe valve 25 is provided under the catalyst storage tank 2 via a gas discharge tube 15 and a filter 24 in consideration of the usage of high-pressure pulse gas. Further, instead of the thermal decomposition used to decompose the material gas in the reactor 1, laser beam decomposition, electronic beam decomposition, ion beam decomposition, plasma decomposition or the like may be used. In either case, the decomposition product generates a carbon nano structure on the surface of the catalyst. The present embodiment in addition provides the spraying means in the catalyst storage tank 2 so as to compulsively blow the catalyst particles resulted from the application of high-pressure pulse gas upward, which has an effect of keeping only the catalyst inside the catalyst storage tank 2. This arrangement gives some preferable effects such as prevention of contamination by impurities from the mechanism components or the like. As long as the catalyst environment without contamination problem or the like is ensured, a catalyst blowing spray device or a compulsive suspending stirrer may be provided on the bottom of the catalyst storage tank 2.

In a sequential CVD, a screw feeder or other commercially-available powder supply device may used to keep a certain amount of catalyst in the catalyst storage tank. Further, a particle diameter measurement device of laser beam or the like may be used to measure the catalyst particle diameter.

The following describes a manufacturing experiment of carbon nano structure using the foregoing production device.

The reactor 1 was heated approximately to 700°C, a $C_2H_2$ gas whose concentration was 8.4 (vol%) was used as a material gas, and a He gas was used as a carrier gas. Super-high-purity acetylene(99.999%) (Saan Gas Nichigo co.ltd.) was used as the $C_2H_2$ gas serving as the material gas.

In the catalyst suspension step, the pulse application time was set to three seconds, the stationary-rest after the high-pressure pulse gas application was set to three seconds, and the pulse application cycle was 3 minutes. With this catalyst suspending condition, the amount of catalyst supplied to the reactor 1 was set to $1.2\times10^{-1}$ (mg/min). A 11SCCM of $C_2H_2$ gas was supplied from the material compressed gas cylinder 31 to the reactor 1, and a 60SCCM of carrier gas was supplied from the compressed gas cylinders 20 and 27 to the reactor 1. The total gas flow rate supplied to the reactor 1, which included the amount of the 60SCCM carrier gas for suppressing the upward flow from the helium compressed gas cylinder 36, was 131 SCCM. A catalyst of Fe-In-Sn-O was used in this example.

In the first manufacturing method under the foregoing condition, 8 hours of continuous manufacturing in the reactor 1 by the CVD method resulted in collection of 1.4 g of carbon nano structure, such as a carbon nanocoil, from the collection tank 7.

Further, the second and the third continuous productions were performed under the foregoing catalyst suspending condition but with different settings of material gas supply amount, catalyst supply amount and carrier gas flow rate. In the second production method, the amount of catalyst supplied to the reactor 1 was $1.5\times10^{-1}$ (mg/min), and a 14.5SCCM of $C_2H_2$ gas was supplied by a 120SCCM of carrier gas, making the total gas flow rate 194.5SCCM. The second production method in total produces 2.9g of carbon nano structure such as a carbon nanocoil. In the third production method, the amount of catalyst supply to the reactor 1 was $2.3\times10^{-1}$(mg/min), and a 21.9SCCM of $C_2H_2$ gas was supplied by a 180SCCM of carrier gas, making the total gas flow rate 262SCCM. The third production method in total produces 3.9g of carbon nano structure such as a carbon nanocoil. As described in the first to third production methods, in the production method and the production device according to the present invention, the collection amount of the carbon nano structure resulted from 8 hours of continuous manufacturing in the reactor 1 by the CVD method was 1.4g, 2.9g, and 3.9g. From the first to third, the amount was increased each by a large rate. According to this result, it was found that in this method the catalyst microparticles and the $C_2H_2$ gas were continuously brought in contact with each other in the CVD process, and were reacted with each other efficiently.

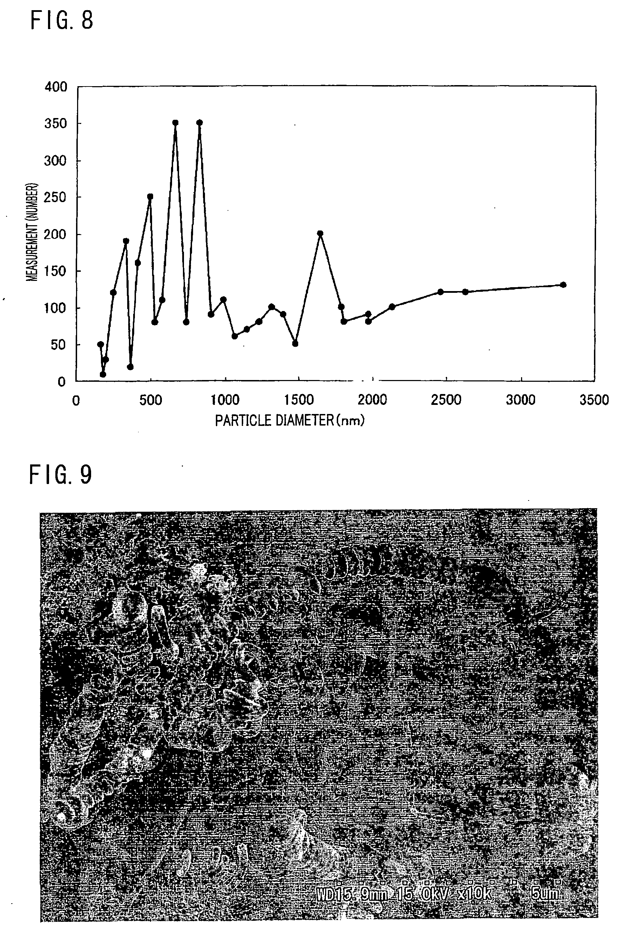

The following describes an example of measurement process for determining the particle diameter of catalyst microparticles by way of the catalyst suspension method, with reference to the foregoing second production method. Figure 7 shows particle diameter distribution of the selected catalyst particles supplied to the reactor 1 in the second production method. Figure 8 shows particle size distribution of the catalyst material accumulated in the catalyst storage tank 2. As shown in the figure, the catalyst material of Figure 8 includes particles of 1000nm which is not appropriate to the growth of carbon nano structure. On the other hand, in the production method and the production device according to the present invention, the particles equal to or more than 1000nm in particle diameter is removed and only the particles 300nm or less, particularly the particles 100nm or less, which are appropriate to the growth of carbon nano structure, were collected. The method and device of the present invention thus ensure desirable effect of particle diameter selection.

Further, the carbon nano structure produced and collected in the second production method was observed by a scanning electron microscope (SEM). Figure 9 shows the SEM image. As shown in the center of the image, the growth of carbon nanocoil was observed. Besides, to their surprise, the inventors of the present invention, who have been intensively studied production and acquirement of carbon nanocoil, found that the particle diameter control of the catalyst microparticles according to the present invention accidentally worked for generation of a new carbon nano structure. There are many curled-like carbon tubes (curled-like CNT) in the vicinity of the carbon nanocoil in the center of the image. Figure 10 shows a diameter distribution based on the SEM image of the image of Figure 9. This diameter distribution shows that the diameter of the curled-like CNT is adjusted to 300nm or less. It also shows that there are many curled-like CNTs equal to or less than 100nm. In the conventional method, carbon nanocoil or carbon nanotube was grown only in a part of the group of fiber-form carbons which greatly differ to each other in diameter. On the other hand, the present invention succeeded to obtain a new type of carbon nano structures which are all within a range of $300\mu m$ or lower in diameter. This new carbon nano structures are constituted of a large number of curled-like CNTs intertwining with each other. The conditions of the curls greatly vary, the range is wide from a loose curl to a severe curl. As it is not easy to mathematically define the curly state with a degree of flexion, it is here described as a state where the curled-like CNT intertwine with each other. As described above, this curled-like carbon nano structure was found by the inventor of the present invention for the first time in the history.

Further, the conditions of curls can be broken into two types: it either exists solely or is mixed with other carbon nano structure. Figure 11 shows a scanning electron microscope (SEM) image showing a carbon nano structure constituted only of curled-like tubes. As shown in the figure, the three-dimensional shapes of the curled-like CNT are not constituted of regular curls but forms a nonperiodic structure in which the tubes are curved arbitrarily within the three dimensional space. Further, as shown by the arrow in the figure, when the curled-like CNT is curved at 180 °, the curled-like CNT does not successively bent, but is bent at two or more points.

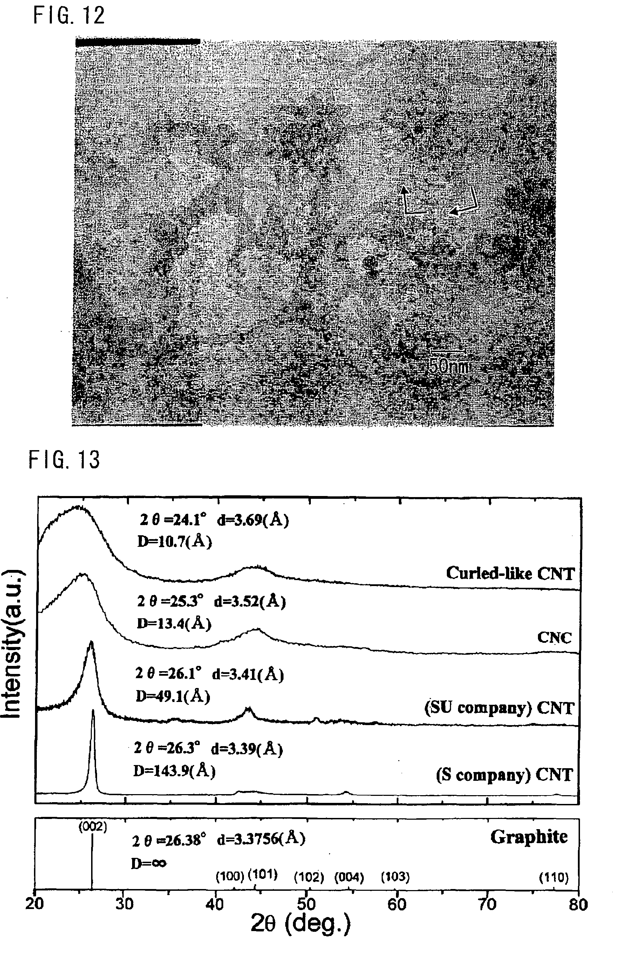

Figure 12 is a transmission electron microscope (TEM) image showing a carbon nano structure constituted only of curled-like tubes. The TEM image shows that the curled-like carbon nano structures are constituted of hollow carbon nanotubes. Further, the two arrows in the figure denote the points where the curled-like CNT is bent at 180 °. With this TEM image it is clear that a curled-like CNT is bent at substantially 180 ° with two folded points.

Figure 13 is an x-ray diffraction profile of the curled-like carbon nanotube (curled-like CNT) according to the present invention. Figure 13 also shows X-ray diffraction profiles of graphite crystal (Graphite), a carbon nanotube (CNT of Company S), a carbon nanotube (CNT of Company SU) and a carbon nanocoil (CNC). The measurement of X-ray diffraction profile was carried out with a Cu-characteristic X-ray of 1.54Å, and the respective diffraction profiles for the diffraction angle 2θ are separately plotted. In the diffraction profile of graphite crystal, which is shown as a comparative example, the peak (referred to as (002) peak) corresponding to the (002) reflection of graphite crystal was observed at the point where 2θ=26.38 °. According to the following relational expression based on Bragg's condition, the plane interval d of the (002) plane of the graphite crystal was found as d=3.3756Å.

$$2d \cdot \sin\theta = \lambda \qquad (1)$$

The maximum peak in the diffraction profile of curled-like CNT according to the present invention corresponds to the (200) reflection of the diffraction profile of graphite crystal, and the maximum peak exists at the point where 2θ = appropriately 24.1 °. The plane interval d is evaluated to be about 3.69Å according to the foregoing expression. Further, the half bandwidth $\beta 1/2$ at the maximum peak of curled-like CNT is evaluated to be 7.96 degree. With the following Scherrer's expression which shows the relationship between the half bandwidth $\beta 1/2$ and the crystallite size D of the diffraction profile, the crystallite size of the CNT crystal is evaluated to be 10.7Å.

$$\beta_{1/2} = 0.94\lambda / (D \cdot \cos\theta) \qquad (2)$$

The maximum peak corresponding to the (002) reflection is also seen in other comparative examples (CNT of Company S, CNT of Company SU, CNC) shown in the same figure. The (002) peak in the diffraction profile of graphite crystal and the respective peaks and the half bandwidths of the CNT of Company S, CNT of Company SU, CNC, and curled-like CNT change systematically. More specifically, the respective peaks of CNT of Company S, CNT of Company SU, CNC and curled-like CNT are shifted in this order to a direction where the plane interval increases, their half bandwidths $\beta_{1/2}$ increases, and the crystallite size decreases.

As shown in the figure, the maximum peaks of CNT of Company S, CNT of Company SU, and CNC are: 2θ=26.3 °, 26.1°, and 25.3 °, respectively. According to the foregoing Formula (1), the plane intervals d of CNT of Company S, CNT of Company SU, and CNC are 3.39Å, 3.41Å, and 3.52Å, respectively. Further, according to the foregoing Formula (2), the crystallite sizes D of CNT of Company S, CNT of Company SU, and CNC are 143.9Å, 49.1Å, and 13.4Å, respectively, based on the half bandwidth $\beta_{1/2}$ of the maximum peaks of their diffraction profiles. Accordingly, compared with the graphite, which is a bulk crystal (D=oo), the comparative carbon nano structures have tendency such that their crystalline properties decrease, their plane intervals increase, and their crystallite sizes decrease. The CNT of the present invention is the smallest in terms of crystallite size D among the comparative examples, and is the largest in terms of plane interval d. The reason of this can be assumed that the curled-like CNT has a nonperiodic structure with steric (three-dimensional) and irregular curves. Such a carbon nano structure has never been discovered, and therefore it is obvious that the carbon nano structure of the present invention is totally a new kind.

The method and the device of the present invention are capable of not only production of a curled-like carbon nano structure, but also production of a single kind of carbon nanotube or carbon nanocoil with some adjustment of production condition such as the catalyst. More specifically, the method and the device of the present invention are capable of production of various carbon nano structures uniform in linear diameter. Therefore, the method and the device of the present invention enable efficient production of carbon nano structures which have been conventionally known. Moreover, the present invention realizes unification of linear diameter of the carbon nano structure to the full possible extent, and produces carbon nano structures uniform in linear diameter at low cost. In an individual carbon nano structure, the uniformity of linear diameter also ensures uniformity in physical, chemical, electronical, and mechanical characteristics. With this advantage the present invention can provide a large number of high-quality carbon nano structures to the market. The carbon nano structure of course include carbon nanotube; brush carbon nanotube constituted of a forest of carbon nanotubes; carbon nanotwist, which is a twisted carbon nanotube; a coil-shaped carbon nanocoil; spherical shell fullerene etc.

The present invention is not limited to the description of the embodiments above, but may be altered by a skilled person within the scope of the claims. An embodiment based on a proper combination of technical means disclosed in different embodiments is encompassed in the technical scope of the present invention.

[Industrial Applicability]

According to the first through third embodiments, the present invention provides a new carbon nano structure 1nm to 300nm in linear diameter, which has a curled state. The curled state is steric and has irregular folded points. According particularly to the second embodiment of the present invention, a greatest peak of a diffraction profile on irradiation of Cu characteristic X-ray 1.54Å in wavelength corresponds to (002) reflection of a graphite crystal, said greatest peak exists in a range of 23° to 25° on 2θ. Further, the half bandwidth of said greatest peak is 6° to 8° on 2θ. According particularly to the third embodiment, the present invention provides a carbon nano structure in which said curled structure has two or more of said folded points when said carbon nanotube is folded substantially at 180 ° .

According to the fourth embodiment, the present invention provides a production device which allows appropriate selection/control of particle diameter of said catalyst microparticles, thereby achieving stable mass production of carbon nano structure at low cost.

The fifth embodiment of the present invention provides a production device including suspending means which allows selecting of light-weighted particles, in other words, particles with small diameters contained in the catalyst material, so that only the small particles are supplied to the reactor as a catalyst of carbon nano structure production. With this arrangement which is immune to influence of variation in particle diameter of catalyst microparticles contained in the catalyst material, the present invention provides a production device capable of stable mass production of carbon nano structure at low cost.

The sixth embodiment of the present invention provides a production device which causes said suspending means to carry out suspension of said catalyst microparticles and then stops the suspension effect given by said suspending means so that said catalyst microparticles naturally or compulsively fall, so as to select the particle diameter. In this manner, only the light-weighted catalyst microparticles are accurately selected using the difference in sedimentation velocity. On this account, a production device capable of stable mass production of carbon nano structure at low cost is realized.

The seventh embodiment of the present invention provides a production device in which said carrying means performs stable supply of catalyst microparticles with desired particle diameters to said reactor. On this account, the present invention provides a production device capable of stable mass production of carbon nano structure at low cost.

According particularly to the eighth embodiment of the present invention, said carrier gas carrying means supplies to said reactor said material gas and said catalyst microparticles by the carrier gas, said carrier gas carrying means introducing the carrier gas into said reactor so as to prevent pressure fluctuation of said reactor. This arrangement enables stable dispersion supply of catalyst microparticles with desired particle diameters to said reactor. On this account, the present invention provides a production device capable of high-yield serial production of carbon nano structure.

According to the ninth embodiment of the present invention, said supplying means instantaneously supplies a high-pressure gas to said catalyst containing section, said catalyst microparticles in said catalyst containing section are suspended by the instantaneous spraying of the high-pressure gas by said spraying means. This arrangement allows the catalyst microparticles to be compulsively blown up efficiently in said catalyst containing section. On this account the present invention provides a production device useful for serial production of carbon nano structure.

According to the tenth embodiment of the present invention, said pulse gas supplying means supplies a pulse gas to said catalyst containing section, said catalyst microparticles in said catalyst containing section are suspended by the spraying of the pulse gas by said spraying means. This arrangement enables easy adjustment of suspending condition according to the desired suspension state by changing pulse interval or the like upon supplying the pulse gas, thereby reducing production cost of carbon nano structure.

According to the eleventh embodiment of the present invention, said gas supplying means intermittently sprays the gas, and suspended catalyst microparticles are left still when the spraying stops, so as to select the particle diameter of the catalyst microparticles. This arrangement carries out accurate selection of catalyst microparticles varied in diameter by using the difference in sedimentation velocity. On this account, the present invention provides a production device capable of high-yield serial production of carbon nano structure.

Twelfth embodiment of the present invention includes catalyst carrying means. With this arrangement, the step of selecting particle diameter and the step of supplying the catalyst particles to said reactor may be sequentially carries out. On this account, the present invention provides a production device capable of high-yield production of carbon nano structure, thereby achieving mass production of carbon nano structure.

According to the thirteenth embodiment of the present invention, said changeover means for discharging a gas from said catalyst containing section into a region other than said reactor at least during emission of gas in the intermittent splaying of the gas. In this way influence to pressure of said reactor is avoided. This arrangement allows selection of particle diameter of the catalyst microparticles in said catalyst containing section without interfering the flow of the sequential steps before the reaction. On this account, the present invention provides a production device capable of mass production of carbon nano structure.

According to the fourteenth embodiment of the present invention, said reactor is aerated with a carrier gas via said gas flow path when the gas is intermittently supplied to reduce pressure fluctuation in the reactor. In this way the selection of the particle diameter of the catalyst microparticles in said catalyst containing section can be carried out without interfering the reaction field of said reactor. This arrangement also allows selection of particle diameter of the catalyst microparticles in said catalyst containing section without interfering the flow of the sequential steps before the reaction. On this account, the present invention provides a production device capable of mass production of carbon nano structure.

The fifteenth embodiment of the present invention is a production method of carbon nano structure in which the catalyst microparticles are selected in the step (ii) before supplied to said reactor. With this arrangement, the catalyst microparticles of desired diameter is selected in the step (ii) and only the selected particles are supplied to said reactor. With this arrangement the present invention achieves stable mass production of carbon nano structure at low cost regardless of particle size distribution of catalyst microparticles of the catalyst material.

According to the sixteenth embodiment of the present invention, the particle diameter is selected in the step (ii) by suspending said catalyst microparticles. In this way, only the particles of desired diameter are selected among the various catalyst particles of the catalyst material to be supplied to the reactor as the catalyst for producing carbon nano structure. With this arrangement the present invention achieves stable mass production of carbon nano structure at low cost regardless of particle size distribution of catalyst microparticles of the catalyst material.

According to the seventeenth embodiment of the present invention, said catalyst microparticles are suspended and then the suspension effect is stopped so that said catalyst microparticles naturally or compulsively fall, so as to select the particle diameter. Accordingly, only the catalyst microparticles with small diameters (eg. particles of 1000nm or less in diameter) are accurately selected using the difference in sedimentation velocity on the natural or compulsive fall, which depends on the particle diameter. The present invention thus realizes stable mass production of carbon nano structure at low cost.

According to the eighteenth embodiment of the present invention, it becomes possible to carry a fixed amount of the selected catalyst microparticles to the reactor. This arrangement enables stable supply of catalyst microparticles with desired particle diameters to said reactor. On this account, the present invention achieves stable mass production of carbon nano structure at low cost.

According to the nineteenth embodiment of the present invention, said material gas and said catalyst microparticles are supplied to said reactor by the carrier gas, and the carrier gas is introduced into said reactor so as to prevent pressure fluctuation of said reactor. With this arrangement, the selected catalyst microparticles are stably introduced in a dispersion manner to said reactor without causing fluctuation of reaction field required for the growth of carbon nano structure. On this account, the present invention realizes high-yield serial production of carbon nano structure.

According to the twenty first embodiment of the present invention, said catalyst microparticles in said catalyst containing section are suspended by the instantaneous spraying of the high-pressure gas. This arrangement allows the catalyst microparticles to be compulsively blown up efficiently in said catalyst containing section, regardless of the residue amount of catalyst microparticles. On this account the present invention achieves efficient serial production of carbon nano structure.

According to the twenty first embodiment of the present invention, said catalyst microparticles in said catalyst containing section are suspended by the spraying of the pulse gas. This arrangement enables easy adjustment of suspending condition according to the desired suspension state by changing pulse interval or the like upon supplying the pulse gas, thereby reducing production cost of carbon nano structure.

According to the twenty second embodiment of the present invention, the selection of particle diameter of the catalyst microparticles is carried out by intermittently spraying the gas, and placing still the suspended catalyst microparticles when the spraying of gas is stopped. This arrangement carries out accurate selection of catalyst microparticles varied in diameter by using the difference in sedimentation velocity of the suspended particles when the catalyst microparticles are left still. On this account, the present invention achieves high-yield serial production of carbon nano structure.

According to the twenty third embodiment of the present invention, said catalyst microparticles suspended in said catalyst containing section are introduced into said reactor by a carrier gas, after the particle diameter is selected. With this arrangement, the step of selecting particle diameter and the step of supplying the catalyst particles to said reactor may be sequentially carries out. On this account, the present invention achieves high-yield production of carbon nano structure, thereby achieving mass production of carbon nano structure.

According to the twenty fourth embodiment of the present invention, the gas from said catalyst containing section is discharged into a region other than said reactor at least during emission of gas in the intermittent splaying of the pulse gas. With this arrangement, the selection of particle diameter in said catalyst containing section may be carried out without causing influence to the reaction field in said reactor. This arrangement allows selection of particle diameter of the catalyst microparticles in said catalyst containing section without interfering the flow of the sequential steps before the reaction. On this account, the present invention contributes smooth mass production of carbon nano structure.

According to the twenty fifth embodiment of the present invention, said reactor is aerated with a carrier gas via a gas flow path during the intermittent spraying of the pulse gas, so that pressure fluctuation in the reactor is reduced.

With this arrangement, the selection of the particle diameter of the catalyst microparticles in said catalyst containing section can be carried out without interfering the reaction field of said reactor. This arrangement also allows selection of particle diameter of the catalyst microparticles in said catalyst containing section without interfering in the flow of the sequential steps before the reaction. On this account, the present invention contributes smooth mass production of carbon nano structure.

**Claims**

1. A carbon nano structure, which is a carbon nanotube 1 nm to 300nm in linear diameter and has a curled state, said curled state is steric and has irregular folded points.

2. The carbon nano structure as set forth in claim 1 wherein a greatest peak of a diffraction profile on irradiation of Cu characteristic X-ray 1.54Å in wavelength corresponds to (002) reflection of a graphite crystal, said greatest peak exists in a range of 23° to 25° on 2θ, and a half bandwidth of said greatest peak ranges from 6° to 8° on 2θ.

3. The carbon nano structure as set forth in claim 1 or 2 wherein said carbon nano tube which has the curled state has two or more of said folded points when said carbon nanotube is folded substantially at 180 °.

4. A production device for producing a carbon nano structure by fluidizing a material gas and catalyst microparticles in a reactor so as to bring said material gas and said catalyst microparticles into contact with each other, said production device at least including selecting means for selecting a particle diameter of said catalyst microparticles, and supplying means for supplying catalyst microparticles selected by said selecting means to said reactor.

5. The production device as set forth in claim 4 wherein said selecting means including suspending means for suspending said catalyst microparticles.

6. The production device as set forth in claim 5 wherein the production device causes said suspending means to carry out suspension of said catalyst microparticles and then stops the suspension effect given by said suspending means so that said catalyst microparticles naturally or compulsively fall, so as to select the particle diameter.

7. The production device as set forth in claim 4 wherein said supplying means is constituted of carrying means for carrying a fixed quantity of said selected catalyst microparticles to said reactor.

8. The production device as set forth in any one of claims 4 through 7 further comprising carrier gas carrying means for supplying to said reactor said material gas and said catalyst microparticles by the carrier gas, said carrier gas carrying means introducing the carrier gas into said reactor so as to prevent pressure fluctuation of said reactor.

9. The production device as set forth in claim 5 or 6 wherein said suspending means is constituted of spraying means for instantaneously spraying a high-pressure gas to said catalyst containing section, said catalyst microparticles in said catalyst containing section are suspended by the instantaneous spraying of the high-pressure gas by said spraying means.

10. The production device as set forth in claim 5 or 6 wherein said suspending means is constituted of pulse gas supplying means for supplying a pulse gas to said catalyst containing section, said catalyst microparticles in said catalyst containing section are suspended by the spraying of the high-pressure gas by said spraying means.

11. The production device as set forth in claim 9 or 10 wherein said gas supplying means intermittently sprays the gas, and suspended catalyst microparticles are left still when the spraying stops, so as to select the particle diameter of the catalyst microparticles.

12. The production device as set forth in claim 11 further comprising a catalyst carrying means for introducing into said reactor said catalyst microparticles suspended in said catalyst containing section by a carrier gas, after the particle diameter is selected.

13. The production device as set forth in claim 11 further comprising changeover means for discharging a gas from said catalyst containing section into a region other than said reactor during the intermittent splaying of the gas, so as to at least avoid influence to pressure of said reactor.

**14.** The production device as set forth in claim 13 further comprising a carrier gas flow path which serves to reduce pressure fluctuation in said reactor by aerating said reactor with a carrier gas during the intermittent spraying of the gas.

**15.** A production method of carbon nano structure in which a material gas and catalyst microparticles are fluidized to be brought into contact with each other in a reactor so as to produce a carbon nano structure, said method comprising the steps of (i) suspending said catalyst microparticles in a gas phase; and (ii) selecting a particle diameter; and (iii) supplying said catalyst microparticles selected in the step (ii) to said reactor.

**16.** The production method of carbon nano structure as set forth in claim 15 wherein in the step (ii) the particle diameter is selected by suspending said catalyst microparticles.

**17.** The production method of carbon nano structure as set forth in claim 15 wherein in the step (ii) the particle diameter is selected by suspending said catalyst microparticles, and then stopping the suspension effect so as to naturally or compulsively drop said catalyst microparticles.

**18.** The production method of carbon nano structure as set forth in claim 15 wherein a fixed quantity of said catalyst microparticles selected in step (ii) is carried to be supplied to said reactor.

**19.** The production method of carbon nano structure as set forth in any one of claims 15 through 18 wherein said material gas and said catalyst microparticles are supplied to said reactor by the carrier gas, and the carrier gas is introduced into said reactor so as to prevent pressure fluctuation of said reactor.

**20.** The production method of carbon nano structure as set forth in claim 16 or 17 wherein said catalyst microparticles in said catalyst containing section are suspended by instantaneously spraying the high-pressure gas to said catalyst containing section.

**21.** The production method of carbon nano structure as set forth in claim 16 or 17 wherein said catalyst microparticles in said catalyst containing section are suspended by spraying the pulse gas to said catalyst containing section.

**22.** The production method of carbon nano structure as set forth in claim 20 or 21 wherein the particle diameter of said catalyst microparticles is selected by intermittently spraying the gas to said catalyst containing section, and then stopping spraying and placing the catalyst microparticles still.

**23.** The production method of carbon nano structure as set forth in claim 22 wherein said catalyst microparticles suspended in said catalyst containing section are introduced into said reactor by a carrier gas, after the particle diameter is selected.

**24.** The production method of carbon nano structure as set forth in claim 22 wherein when the gas is intermittently sprayed into said catalyst containing section, the gas in said catalyst containing section is discharged into a region other than said reactor at least while the gas is emitted.

**25.** The production method of carbon nano structure as set forth in claim 24 wherein when the gas is intermittently sprayed into said catalyst containing section, said reactor is aerated with a carrier gas through a gas flow path so as to reduce pressure fluctuation in said reactor.

FIG. 1

FIG. 2

FIG. 3

FIG. 4

FIG. 5

## FIG. 6

## FIG. 7

FIG. 8

FIG. 9

FIG. 10

FIG. 11

## FIG. 12

## FIG. 13

Curled-like CNT
$2\theta=24.1°$ d=3.69(Å)
D=10.7(Å)

CNC
$2\theta=25.3°$ d=3.52(Å)
D=13.4(Å)

(SU company) CNT
$2\theta=26.1°$ d=3.41(Å)
D=49.1(Å)

(S company) CNT
$2\theta=26.3°$ d=3.39(Å)
D=143.9(Å)

Graphite
(002)
$2\theta=26.38°$ d=3.3756(Å)
D=∞
(100) (101) (102) (004) (103) (110)

Intensity(a.u.)

$2\theta$ (deg.)

<div align="center">

**INTERNATIONAL SEARCH REPORT**

</div>

| | International application No. |
|---|---|
| | PCT/JP2005/012909 |

**A. CLASSIFICATION OF SUBJECT MATTER**
*C01B31/02* (2006.01), *D01F9/127* (2006.01), *D01F9/133* (2006.01)

According to International Patent Classification (IPC) or to both national classification and IPC

**B. FIELDS SEARCHED**

Minimum documentation searched (classification system followed by classification symbols)
*C01B31/02* (2006.01), *D01F9/127* (2006.01), *D01F9/133* (2006.01)

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)
JSTPlus(JOIS), Science Direct (ELSEVIER)

**C. DOCUMENTS CONSIDERED TO BE RELEVANT**

| Category* | Citation of document, with indication, where appropriate, of the relevant passages | Relevant to claim No. |
|---|---|---|
| X | Weizhong QIAN et al., Effect of adding nickel to iron-alumina catalysts on the morphology of as-grown carbon nanotubes, CARBON, 2003, Vol.41, pages 2487 to 2493 | 1-3 |
| X | Rogun HAN et al., "Fe-In-Sn-O Kongo Shokubai de Sakusei shita Carbon Nonocoil no Denkai Hoshutsu Tokusei", Japan Hardcopy 2003 Ronbunshu, 2003, pages 143 to 146 | 1-3 |
| X | Padmaker D. et al., Thin film metallic catalyst coatings for the growth of multiwalled carbon nanotubes by pyrolysis of xylene, CARBON, 2002, Vol.40, pages 1903 to 1909 | 1-3 |

☒ Further documents are listed in the continuation of Box C. ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 October, 2005 (07.10.05) | 29 November, 2005 (29.11.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2005/012909 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | Yong QIN et al., Helical carbon nanofibers prepared by pyrolysis of acetylene with a catalyst derived from the decomposition of copper tartrate, CARBON, 2003, Vol.41, pages 3063 to 3074 | 1-3 |
| X | JP 3-104927 A (Central Glass Co., Ltd.), 01 May, 1991 (01.05.91), Claim 1; examples 1, 2; Figs. 1 to 3 & US 4816289 A | 1-3 |
| X Y A | JP 2003-213530 A (Futaba Corp.), 30 July, 2003 (30.07.03), Claims 10, 12; Par. Nos. [0062] to [0072], [0080], [0085]; Figs. 4, 11 & US 2003/0148097 A1 | 1-3 4-8,15-19 9-14,20-25 |
| Y A | JP 2001-526164 A (Nanogram Corp.), 18 December, 2001 (18.12.01), Claim 3; Par. Nos. [0005], [0058], [0069] to [0072] & WO 1999/029940 A1      & EP 1040216 A1 & US 6045769 A          & TW 414815 B | 4-8,15-19 9-14,20-25 |
| Y | Edited by The Society of Chemical Engineers, Japan, Chemical engineering of Japan Benran, revised edition No.6, 25 February, 1999 (25.02.99), pages 856 to 861 | 4-8,15-19 |
| E,X | JP 2005-232667 A (Showa Denko Kabushiki Kaisha), 02 September, 2005 (02.09.05), Claims 1, 6; Par. Nos. [0006], [0106] to [0115]; Figs. 1, 2, 7 | 1,3 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001192204 A
- JP 2001 A
- JP 310130 A

- JP 2003026410 A
- JP 2001310130 A

**Non-patent literature cited in the description**

- **AMELINCKX ; X.B.ZHANG ; D. BERNAERTS ; X. F. ZHANG ; V. IVANOV ; J. B. NAGY.** *SCIENCE,* 1994, vol. 265, 635
- **W.LI ; S.XIE ; W.LIU ; R.ZHAO ; Y.ZHANG ; W.ZHOU ; G.WANG.** *J.Material Sci.,* 1999, vol. 34, 2745

- **SHAOMING YANG ; XIUQIN CHEN ; SEIJI MOTO-JIMA.** *Diamond and Related Materials,* 2004, vol. 13, 85-92
- **W. LI ; S. XIE ; W. LIU ; R. ZHAO ; Y .ZHANG ; W. ZHOU ; G.WANG.** *J.Material Sci.,* 1999, vol. 34, 2745